(19) Europäisches Patentamt
European Patent Office
Office européen des brevets

(11) **EP 2 375 556 B1**

## (12) FASCICULE DE BREVET EUROPEEN

(45) Date de publication et mention
de la délivrance du brevet:
**08.10.2014 Bulletin 2014/41**

(51) Int Cl.:
***H02M 7/487*** *(2007.01)*

(21) Numéro de dépôt: **11156442.3**

(22) Date de dépôt: **01.03.2011**

(54) **Procédé de commande d'un onduleur de type NPC**

Steuerverfahren eines Wechselrichters vom Typ NPC

Method of controlling an inverter of NPC type

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.04.2010 FR 1052603**

(43) Date de publication de la demande:
**12.10.2011 Bulletin 2011/41**

(73) Titulaire: **Schneider Toshiba Inverter Europe SAS
27120 Pacy sur Eure (FR)**

(72) Inventeurs:
• **Capitaneanu, Stefan
27220 Mousseaux Neuville (FR)**
• **Malrait, François
27120 Jouy sur Eure (FR)**
• **Rouchon, Pierre
92190 Meudon (FR)**

(74) Mandataire: **Bié, Nicolas et al
Schneider Electric Industries SAS
Service Propriété Industrielle
35 rue Joseph Monier - CS 30323
92506 Rueil-Malmaison Cedex (FR)**

(56) Documents cités:
**US-A- 5 355 297      US-B1- 6 842 354**

• **GUPTA A K ET AL: "A simple space vector PWM
scheme to operate a three-level NPC inverter at
high modulation index including over-
modulation region, with neutral point balancing",
INDUSTRY APPLICATIONS CONFERENCE, 2005.
FOURTIETH IAS ANNUAL MEETING.
CONFERENCE RECORD OF THE 2005 HONG
KONG, CHINA 2-6 OCT. 2005, PISCATAWAY, NJ,
USA,IEEE, vol. 3, 2 octobre 2005 (2005-10-02),
pages 1657-1664, XP010842617, DOI: DOI:
10.1109/IAS.2005.1518669 ISBN:
978-0-7803-9208-3**

**Description**

La présente invention se rapporte à un procédé de commande d'un onduleur multiniveaux de type NPC (pour "Neutral Point Clamped"). L'invention concerne également un variateur de vitesse incluant l'onduleur de type NPC de l'invention.

Un onduleur de type NPC est connu dans l'état de la technique. Il comporte notamment trois bras de commutation parallèles connectés entre une ligne positive et une ligne négative d'un bus continu (DC). Chaque bras de commutation est doté de quatre interrupteurs de puissance reliés en série, les interrupteurs de puissance étant commandés par un module de commande du variateur de vitesse à partir d'un vecteur tension de commande dans le but de commander une charge électrique. Le variateur comporte également un point milieu réalisé entre deux condensateurs connectés en série entre la ligne positive et la ligne négative du bus continu, ledit point milieu étant traversé par un courant.

Dans la commande d'un onduleur NPC, la difficulté principale réside dans la régulation du potentiel électrique du point milieu. En effet, le potentiel électrique du point milieu est obtenu par la division des tensions aux bornes des deux condensateurs et varie donc selon la quantité de courant délivrée à la charge. Or si le potentiel du point milieu varie beaucoup, un excès de tension apparaît aux bornes des condensateurs, ce qui peut causer des instabilités ou même une détérioration de ces condensateurs.

Les brevets US6795323, US6490185 ou US7495938 proposent différentes méthodes de régulation du potentiel électrique du point milieu. Cependant, ces méthodes ne sont pas adaptées lorsque l'onduleur doit fonctionner à pleine tension, ou autrement dit en surmodulation.

Le document "A simple space vector PWM scheme to operate a three level NPC inverter at high modulation index including over-modulation region, with neutral point balancing" de Gupta A.K., publié le 2 octobre 2005, divulgue un procédé de commande d'un onduleur multiniveaux de type NPC selon le préambule de la revendication 1.

Le but de l'invention est donc de proposer un procédé de commande d'un onduleur de type NPC dans lequel un module de commande est apte à faire fonctionner l'onduleur en surmodulation sans dommage sur les condensateurs.

Ce but est atteint par un procédé de commande d'un onduleur multiniveaux de type NPC (Neutral Point Clamped) comprenant :

- trois bras de commutation parallèles connectés entre une ligne positive et une ligne négative d'un bus, chaque bras de commutation étant doté de quatre interrupteurs de puissance reliés en série, les interrupteurs de puissance étant commandés par un module de commande du variateur de vitesse à partir d'un vecteur tension de commande dans le but de commander une charge électrique,
- le module de commande utilisant un espace vectoriel hexagonal définissant les vecteurs tensions réalisables par les différentes combinaisons de commande des bras de commutation, lesdites différentes combinaisons de commande étant définies dans six triangles identiques couvrant l'espace vectoriel, chaque triangle de l'espace vectoriel comportant notamment deux sommets définissant un premier côté du triangle et un point intermédiaire situé sur ledit premier côté, les deux sommets et le point intermédiaire correspondant chacun à une seule combinaison de commande des bras de commutation,
- deux condensateurs connectés en série entre la ligne positive et la ligne négative du bus et un point milieu défini entre les deux condensateurs, ledit point milieu étant traversé par un courant,

le procédé comprenant :

- une étape de détermination d'une position du vecteur tension de commande dans l'un des six triangles identiques couvrant l'espace vectoriel hexagonal,
- une étape de régulation du potentiel électrique du point milieu,

caractérisé en ce que lorsque l'onduleur fonctionne en surmodulation, l'étape de régulation du potentiel électrique du point milieu comporte :

- une étape de détermination du signe positif ou négatif du produit entre le courant traversant le point milieu et son potentiel électrique,
- une étape de décomposition du vecteur tension de commande en utilisant majoritairement le vecteur tension de l'espace vectoriel joignant ledit point intermédiaire du triangle lorsque le signe du produit est négatif ou en utilisant les deux vecteurs tension joignant lesdits deux sommets du triangle lorsque le signe du produit est positif.

Selon une particularité, lorsque le signe du produit entre le courant traversant le point milieu et son potentiel électrique est positif, l'étape de décomposition du vecteur tension de commande utilise de manière minoritaire le vecteur tension de l'espace vectoriel joignant le point intermédiaire du triangle.

Selon une autre particularité du procédé de commande :

- chaque triangle comporte un deuxième côté et un troisième côté sur chacun desquels sont définis deux points intermédiaires formant deux combinaisons de commande des bras de commutation lorsque le potentiel électrique du point milieu est non nul, et
- hors modulation, l'étape de régulation du point milieu comporte pour le deuxième côté et/ou le troisième côté du triangle, une étape d'introduction d'un vecteur décomposé en fonction des vecteurs tension joignant les points intermédiaires dudit côté.

Selon une autre particularité, selon la position du vecteur tension de commande dans l'un des triangles de l'espace vectoriel, le procédé comporte une étape pour toujours ramener le vecteur tension de commande dans un même triangle de l'espace vectoriel.

D'autres caractéristiques et avantages vont apparaître dans la description détaillée qui suit en se référant à un mode de réalisation donné à titre d'exemple et représenté par les dessins annexés sur lesquels :

- la figure 1 représente un onduleur de type NPC,

- la figure 2 représente de manière simplifiée chaque bras de commutation de l'onduleur de l'invention et indique le courant milieu généré par chaque bras lorsque le point milieu est actif,

- la figure 3 représente l'espace vectoriel hexagonal définissant les vecteurs tension réalisables par les différentes combinaisons de commande des bras de commutation de l'onduleur NPC,

- la figure 4 représente le découpage en triangle de l'espace vectoriel hexagonal,

- la figure 5 représente un triangle de l'espace vectoriel dans lequel est appliqué un vecteur tension de commande lorsque le potentiel du point milieu est nul,

- la figure 6 représente un triangle de l'espace vectoriel dans lequel est appliqué un vecteur tension de commande lorsque le potentiel du point milieu est non nul,

- la figure 7 représente un triangle de l'espace vectoriel lorsque le potentiel du point milieu est nul et montre les valeurs du courant milieu obtenu pour chaque combinaison de commande des bras de commutation.

L'invention concerne un onduleur de type NPC et le procédé de commande mis en oeuvre lorsque cet onduleur fonctionne à pleine tension. Associé à un redresseur en entrée, l'onduleur de type NPC peut être employé dans un variateur de vitesse pour commander une charge électrique.

De manière connue, un onduleur de type NPC comporte trois bras 1, 2, 3 de commutation connectés entre une ligne positive (+) et une ligne négative (-) d'un bus continu d'alimentation. Chaque bras de commutation comporte quatre interrupteurs connectés en série, par exemple de type IGBT. Sur chaque bras, un point milieu de connexion sépare deux interrupteurs situés en haut de deux interrupteurs situés en bas. Sur chaque bras, le point milieu de connexion est relié à une phase U, V, W d'une charge électrique connectée en sortie de l'onduleur.

L'onduleur comporte en outre deux condensateurs C1, C2 connectés en série entre la ligne positive et la ligne négative du bus continu d'alimentation. Un potentiel électrique $V_o$ est généré sur un point milieu O situé entre les deux condensateurs C1, C2.

Pour la commande en modulation de largeur d'impulsion, la méthode de réalisation des ordres de commande des douze interrupteurs de l'onduleur NPC est constituée des étapes détaillées ci-dessous :

## 1) Représentation complexe

Sur chaque bras de commutation, en fonction du pilotage des quatre interrupteurs, on obtient les tensions de sortie Vs entre la phase et le point milieu O selon le tableau suivant :

| $T1_1, T2_1, T3_1$ | $T1_2, T2_2, T3_2$ | $T1_3, T2_3, T3_3$ | $T1_4, T2_4, T3_4$ | Vs |
|---|---|---|---|---|
| 1 | 1 | 0 | 0 | Vbus/2 |
| 0 | 1 | 1 | 0 | $V_O=0$ |

(suite)

| T1$_1$, T2$_1$, T3$_1$ | T1$_2$, T2$_2$, T3$_2$ | T1$_3$, T2$_3$, T3$_3$ | T1$_4$, T2$_4$, T3$_4$ | Vs |
|---|---|---|---|---|
| 0 | 0 | 1 | 1 | -Vbus/2 |

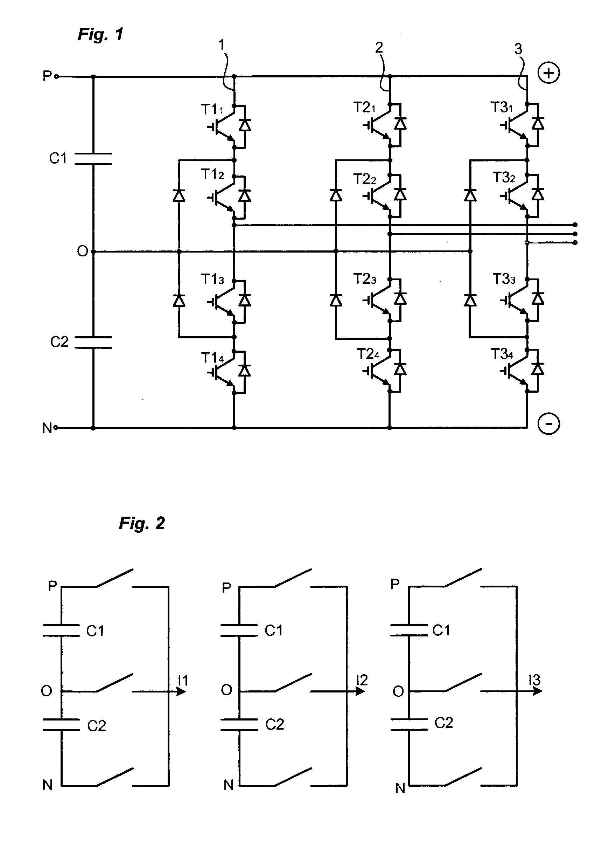

Les trois bras de commutation de l'onduleur peuvent être schématisés comme représenté sur la figure 2. Sur cette figure, P, O, N définissent les trois potentiels réalisés par (T1$_1$, T1$_2$), (T1$_2$, T1$_3$), (T1$_3$, T1$_4$) respectivement sur le premier bras 1 de commutation et (T2$_1$, T2$_2$), (T2$_2$, T2$_3$), (T2$_3$, T2$_4$) respectivement sur le deuxième bras 2 de commutation et (T3$_1$, T3$_2$), (T3$_2$, T3$_3$), (T3$_3$, T3$_4$) respectivement sur le troisième bras 3 de commutation. Lorsque le potentiel O est appliqué sur le premier bras de commutation de l'onduleur, un courant I1 traversant le point milieu est délivré à la charge. Lorsque le potentiel O est appliqué sur le deuxième bras de commutation de l'onduleur, un courant I2 traversant le point milieu est délivré à la charge et lorsque le potentiel O est appliqué sur le troisième bras de commutation, un courant I3 est délivré à la charge. Par ailleurs, il est connu que la somme de ces trois courants est nulle : I1 +I2+I3=0 et I$_o$=0.

L'onduleur comporte également un module de commande destiné à envoyer des ordres de commande aux interrupteurs des bras de commutation. Pour cela, ce module de commande utilise un espace vectoriel hexagonal définissant les vecteurs tension réalisables par les différentes combinaisons de commande des bras de commutation.

Cet espace vectoriel hexagonal peut se découper en six grands triangles équilatéraux identiques ou en vingt-quatre petits triangles équilatéraux identiques. Chaque sommet d'un petit triangle correspond à une ou plusieurs combinaisons de commande des bras de commutation.

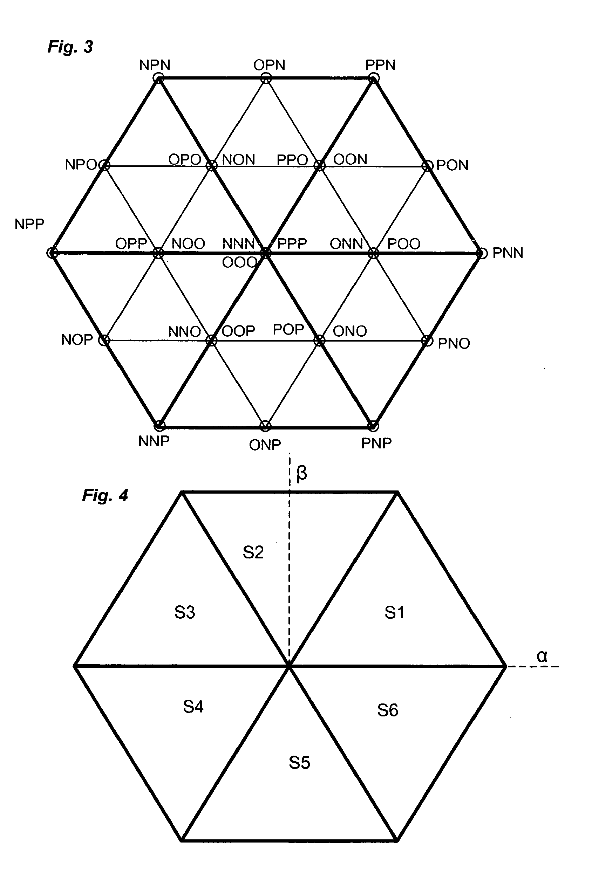

Sur la figure 3, les points de l'hexagone représentent donc des tensions réalisables avec les ordres de commandes des douze interrupteurs de l'onduleur. Par exemple, sur cet hexagone, PON est une notation qui dit que le premier bras de l'onduleur est au niveau positif (P ou Vbus/2 dans le tableau antérieur) de la tension d'alimentation du bus continu, que le deuxième bras est au niveau zéro (ou V$_o$ dans le tableau antérieur) de la tension d'alimentation du bus continu et que le troisième bras est au niveau négatif (N ou -Vbus/2) du bus continu.

Un vecteur tension de commande U destiné à être appliqué à la charge électrique connectée à l'onduleur peut se trouver partout dans l'espace vectoriel hexagonal défini ci-dessus. Ce vecteur tension de commande peut ainsi s'exprimer de la manière suivante en fonction des vecteurs tensions réalisables définis dans l'espace vectoriel :

$$
\begin{aligned}
U = {} & C_{PPP} \cdot U_{PPP} + C_{OOO} \cdot U_{OOO} + C_{NNN} \cdot U_{NNN} + C_{POO} \cdot U_{POO} + C_{ONN} \cdot U_{ONN} + \\
& C_{PPO} \cdot U_{PPO} + C_{OON} \cdot U_{OON} + C_{PNN} \cdot U_{PNN} + C_{PON} \cdot U_{PON} + C_{PPN} \cdot U_{PPN} + \\
& C_{NON} \cdot U_{NON} + C_{OPO} \cdot U_{OPO} + C_{OPP} \cdot U_{OPP} + C_{NOO} \cdot U_{NOO} + C_{POP} \cdot U_{POP} + \\
& C_{ONO} \cdot U_{ONO} + C_{PNO} \cdot U_{PNO} + C_{PNP} \cdot U_{PNP} + C_{ONP} \cdot U_{ONP} + C_{NNP} \cdot U_{NNP} + \\
& C_{OOP} \cdot U_{OOP} + C_{NNO} \cdot U_{NNO} + C_{NOP} \cdot U_{NOP} + C_{NPP} \cdot U_{NPP} + C_{NPO} \cdot U_{NPO} + \\
& C_{NPN} \cdot U_{NPN} + C_{OPN} \cdot U_{OPN}
\end{aligned}
$$

Les coefficients C$_{ijk}$ représentent les rapports cycliques et correspondent chacun à la durée d'application du vecteur tension correspondant divisé par la durée d'échantillonnage de l'onduleur. La somme totale de tous les coefficients C$_{ijk}$ vaut 1.

## 2) Positionnement du vecteur tension de commande dans l'espace vectoriel

L'espace vectoriel hexagonal peut être divisé en six grands triangles équilatéraux identiques formant les secteurs S1, S2, S3, S4, S5, S6. En fonction de l'angle θ formé par le vecteur tension de commande dans le repère (α, β) sur la figure 4, le vecteur tension de commande sera dans l'un des six grands triangles.

## 3) Réduction de l'hexagone à un triangle

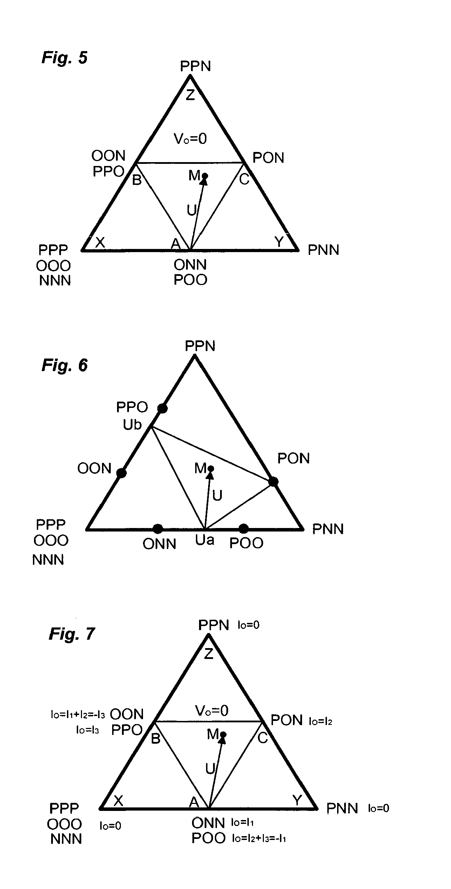

Le plan complexe défini précédemment est réduit à un seul secteur (S1) défini sur la figure 5. Les vecteurs tension de commande réalisés dans les secteurs S2, S3, S4, S5, S6 peuvent être ramenés dans le secteur S1 en utilisant des propriétés géométriques simples associés à des permutations des indices de tension (1, 2, 3). Dans le tableau ci-dessous, J représente une rotation de 2π/3 et S$_H$ une symétrie d'axe horizontal. Le tableau ci-dessous résume les opérations à effectuer qui permettent de tout ramener au secteur S1 lorsque le vecteur tension de commande se trouve dans l'un des autres secteurs :

|  |  | Opérations géométriques | Place des indices réels (123) dans S1 | Equivalence des indices (123) de S1 |
|---|---|---|---|---|
|  | S1 |  | 123 | 123 |
|  | S2 | $\Rightarrow S_H \Rightarrow J$ | 123⇒132⇒213 | 213 |
|  | S3 | ⇒J⇒J | 123⇒231⇒312 | 312 |
|  | S4 | $\Rightarrow S_H \Rightarrow J \Rightarrow J$ | 123⇒132⇒213⇒321 | 321 |
|  | S5 | ⇒J | 123⇒231 | 231 |
|  | S6 | $\Rightarrow S_H$ | 123⇒132 | 132 |

L'intérêt d'une telle simplification est de diviser en moyenne par six le nombre des cas à considérer pour la réalisation des vecteurs tension de commande sur une période MLI.

Par exemple, un vecteur tension de commande présent dans le secteur T3 peut être ramené dans le secteur S1 en étant multiplié par $J^2$. Il en est de même pour le courant associé à ce vecteur tension de commande.

Dans le secteur S1, le vecteur tension de commande U peut donc s'exprimer de la manière simplifiée suivante :

$$U = C_{PPP} \cdot U_{PPP} + C_{OOO} \cdot U_{OOO} + C_{NNN} \cdot U_{NNN} + C_{POO} \cdot U_{POO} + C_{ONN} \cdot U_{ONN} +$$
$$C_{PPO} \cdot U_{PPO} + C_{OON} \cdot U_{OON} + C_{PNN} \cdot U_{PNN} + C_{PON} \cdot U_{PON} + C_{PPN} \cdot U_{PPN}$$

### 4) Positionnement dans le secteur S1

Le vecteur U ramené dans le secteur S1 est situé dans l'un des quatre petits triangles couvrant le secteur S1 comme représenté en figure 5.

Pour identifier la position du vecteur tension de commande dans l'un des quatre petits triangles, il est possible d'employer une méthode géométrique. Le produit vectoriel de deux vecteurs est un vecteur orienté positivement ou négativement en fonction de la position relative des deux vecteurs.

Ainsi, le produit vectoriel des vecteurs reliés au point M sur lequel pointe le vecteur tension de commande permet donc d'identifier la position du vecteur tension de commande dans l'un des quatre petits triangles.

Si AM $\times$ AB $< 0$ , le point M est donc dans le triangle XAB.

Si AM $\times$ AB $> 0$ , deux cas sont possibles :

AM $\times$ AC $< 0$, le point M est donc dans le triangle ACY.

AM $\times$ AC $> 0$, deux cas sont possibles :

BM $\times$ BC $< 0$, le triangle est dans le triangle BCZ.

Sinon le point M est dans le triangle ABC.

Dans le triangle XAB, le vecteur tension de commande U s'exprime de la manière suivante :

$$U = C_{PPP} \cdot U_{PPP} + C_{OOO} \cdot U_{OOO} + C_{NNN} \cdot U_{NNN} + C_{POO} \cdot U_{POO} + C_{ONN} \cdot U_{ONN} +$$
$$C_{PPO} \cdot U_{PPO} + C_{OON} \cdot U_{OON}$$

Dans le triangle ACY, le vecteur tension de commande U s'exprime de la manière suivante :

$$U = C_{POO} \cdot U_{POO} + C_{ONN} \cdot U_{ONN} + C_{PNN} \cdot U_{PNN} + C_{PON} \cdot U_{PON}$$

Dans le triangle BCZ, le vecteur tension de commande s'exprime de la manière suivante :

$$U = C_{PPO} \cdot U_{PPO} + C_{OON} \cdot U_{OON} + C_{PON} \cdot U_{PON} + C_{PPN} \cdot U_{PPN}$$

Dans le triangle ABC, le vecteur tension de commande s'exprime de la manière suivante :

$$U = C_{POO} \cdot U_{POO} + C_{ONN} \cdot U_{ONN} + C_{PPO} \cdot U_{PPO} + C_{OON} \cdot U_{OON} + C_{PON} \cdot U_{PON}$$

Dans chaque triangle, le choix des vecteurs et le choix des rapports cycliques se fait suivant différents critères d'optimisation, tels que la réduction du nombre de commutations par période MLI, la suppression des surtensions dues aux câbles longs entre le variateur et la charge électrique...

D'autres critères d'optimisation de la commande de l'onduleur NPC peuvent être ajoutés pour par exemple réduire les pertes Joule par commutation, réduire le courant de mode commun généré par les stratégies PWM...

Dans l'expression du vecteur tension de commande, il est également nécessaire de prendre en compte systématiquement la valeur du potentiel électrique $V_O$ du point milieu.

**5) Régulation du potentiel électrique du point milieu**

Lorsque le potentiel du point milieu est différent de zéro, certains vecteurs tension réalisables du secteur S1 sont modifiés. Ainsi, comme représenté sur la figure 6, le vecteur tension $U_{PPO}$ devient différent de $U_{OON}$ et $U_{ONN}$ devient différent de $U_{POO}$.

Le principe est alors de se ramener au cas général dans lequel le potentiel électrique du point milieu est nul. Pour cela, on introduit les vecteurs tensions Ua et Ub, barycentres respectivement de ($U_{PPO}$, $U_{OON}$) et ($U_{ONN}$, $U_{POO}$). On introduit donc :

$$Ua = aU_{POO} + (1-a)U_{ONN}$$

$$Ub = bU_{OON} + (1-b)U_{PPO}$$

Le principe est alors de considérer les tensions Ua et Ub définies ci-dessus et de choisir les coefficients a et b de manière à réguler le potentiel $V_o$ du point milieu.

$$Ia = aI_{POO} + (1-a)I_{ONN}$$

$$Ib = bI_{OON} + (1-b)I_{PPO}$$

Ia est le courant qui participe à $I_o$ lorsqu'on choisit la répartition $U_a$ Ib est le courant qui participe à $I_O$ lorsqu'on choisit la répartition $U_b$. Les coefficients a et b ci-dessus sont compris entre 0 et 1 de manière à réguler la tension $V_o$ en contrôlant le courant $I_O$.

Dans le secteur S1, chacun des vecteurs tension réalisables correspond à l'apparition d'un courant milieu $I_o$ passant par le point milieu O. Ce courant milieu est calculé comme la somme des courants $I_1$, $I_2$ et $I_3$ (figure 2) lorsque le point O est actif. On a donc $I_1 + I_2 + I_3 = I_O = 0$.

La figure 7 représente le secteur S1 et indique le courant milieu obtenu pour chaque combinaison de commande des bras de commutation.

- pour PPP, OOO, NNN on obtient $I_O=0$

- pour OON, on obtient $I_O=I_1+I_2=I_3$

- pour PPO, on obtient $I_O=I_3$

- pour ONN, on obtient $I_O=I_1$

- pour POO, on obtient $I_O=I_2+I_3=-I_1$

- pour PNN, on obtient $I_O=0$

- pour PON, on obtient $I_O=I_2$

- pour PPN, on obtient $I_O=0$

Selon la combinaison de commande ONN ou POO, le courant milieu $I_O$ obtenu vaut $I_1$ ou $-I_1$ et selon la combinaison de commande OON ou PPO, le courant milieu $I_O$ obtenu vaut $I_3$ ou $-I_3$. Il vient :

$$Ia = -(1-2a)I_1$$

$$Ib = (2b-1)I_3$$

Le choix le plus simple est donc de prendre :

$$a = \frac{1+\text{signe}(V_O I_1)}{2} \quad \text{et} \quad b = \frac{1+\text{signe}(V_O I_3)}{2}$$

Le résultat de la fonction "signe" employée dans les deux formules ci-dessus peut prendre la valeur 1 ou -1 selon que le signe des produits $V_O I_1$ ou $V_O I_3$ est positif ou négatif.

Bien entendu, il est possible d'exprimer les coefficients a et b autrement.

Grâce à la formulation de Ua et Ub, le vecteur tension de commande U s'exprime alors de la façon suivante :

$$U = C_{OOO} \cdot U_{OOO} + Ca \cdot Ua + Cb \cdot Ub + C_{PON} \cdot U_{PON} + C_{PPN} \cdot U_{PPN} + C_{PNN} \cdot U_{PNN}$$

La régulation du point milieu réalisée grâce à la méthode décrite ci-dessus fonctionne très bien lorsque le point M est positionné dans le secteur S1. Cependant, lorsque l'onduleur est amené à fonctionner à pleine tension, c'est-à-dire à tension nominale, la méthode décrite ci-dessus ne peut plus être employée.

En effet dans cette situation, le vecteur tension de commande se trouve au bord de l'hexagone de l'espace vectoriel. Or en raisonnant dans le secteur S1, on remarque que seules les combinaisons de commande PPN, PON et PNN peuvent être utilisées. Comme montré sur la figure 7, les combinaisons PPN ou PNN permettent d'obtenir un courant milieu $I_O=0$ et la combinaison PON permet d'obtenir un courant milieu $I_O=I_2$. Dans tous les cas, il est donc impossible de pouvoir jouer sur le signe du courant milieu $I_O$ comme dans les cas précédents et il devient donc impossible d'employer la méthode précédente pour réguler le potentiel électrique $V_o$ du point milieu.

Cependant, à pleine tension, le vecteur tension de commande U tourne à une vitesse $\omega s$ de l'ordre de 50Hz ou plus. Ainsi lorsque le vecteur tension de commande U fait un tour complet, les courants milieu correspondants aux combinaisons de commande réalisables sur les bords de l'hexagone sont les suivants :

- si le vecteur tension de commande appartient à S1 la combinaison de commande est PON, donc $I_O = I_2$,

- si le vecteur tension de commande appartient à S2 la combinaison de commande est OPN, donc $I_O = I_1$,

- si le vecteur tension de commande appartient à S3 la combinaison de commande est NPO, donc $I_O = I_3$,

- si le vecteur tension de commande appartient à S4 la combinaison de commande est NOP, donc $I_O = I_2$,

- si le vecteur tension de commande appartient à S5 la combinaison de commande est ONP, donc $I_O = I_1$,

- si le vecteur tension de commande appartient à S6 la combinaison de commande est PNO, donc $I_O = I_3$.

Or en tenant compte de la position $\theta s$ du vecteur tension de commande de sorte que $\dfrac{d\theta s}{dt} = \omega s$, on peut prouver que :

- si le vecteur tension de commande U appartient à S1, alors le courant milieu $I_O$ est égal à une valeur X,

- si le vecteur tension de commande U appartient à S2, alors le courant milieu $I_O$ est égal à -X,

- si le vecteur tension de commande U appartient à S3, alors le courant milieu $I_O$ est égal à X,

- si le vecteur tension de commande U appartient à S4, alors le courant milieu $I_O$ est égal à -X,

- si le vecteur tension de commande U appartient à S5, alors le courant milieu $I_O$ est égal à X,

- si le vecteur tension de commande U appartient à S6, alors le courant milieu $I_O$ est égal à -X.

Ainsi sur deux côtés consécutifs de l'hexagone, le courant milieu $I_O$ associé à une tension de type $U_{PON}$ prend deux valeurs égales mais de signes opposés. Il est donc possible de réguler en moyenne sur un tour le potentiel électrique $V_o$ du point milieu, dans une première situation, en utilisant le vecteur tension réalisable $U_{PON}$ lorsque le courant $I_o$ est de signe opposé à $V_o$ et dans une deuxième situation en évitant d'utiliser $U_{PON}$ lorsque $I_o$ est de même signe que $V_o$. Dans la deuxième situation, il convient de décomposer $U_{PON}$ grâce à $U_{PPN}$ et $U_{PNN}$. Cependant, lorsque cette décomposition est employée, il convient d'appliquer pendant un temps minimum le vecteur $U_{PON}$, ceci pour éviter une commutation d'amplitude E égale à la tension du bus.

Ainsi si le temps minimum à passer sur PON est très inférieur à la période de la MLI ($T_{MLI}$), alors il convient de modifier la répartition barycentrique sur PON.

Ainsi en partant de l'expression précédente du vecteur tension de commande U selon laquelle :

$$U = C_{OOO} \cdot U_{OOO} + Ca \cdot Ua + Cb \cdot Ub + C_{PON} \cdot U_{PON} + C_{PPN} \cdot U_{PPN} + C_{PNN} \cdot U_{PNN}$$

Si $C_{PON} T_{MLI} \leq T\varepsilon$ alors le vecteur tension de commande U est appliqué grâce à la formule :

$$U = C_{OOO} \cdot U_{OOO} + Ca \cdot Ua + Cb \cdot Ub + C_{PON} \cdot U_{PON} + C_{PPN} \cdot U_{PPN} + C_{PNN} \cdot U_{PNN}$$

En revanche, si $C_{PON} T_{MLI} \geq T\varepsilon$ alors on pose l'équation :

$$U_{PON} = cU_{PON} + (1-c)\left( \dfrac{\dfrac{E}{2}-V_O}{E}U_{PNN} + \dfrac{\dfrac{E}{2}+V_O}{E}U_{PPN} \right)$$

Avec par exemple c = ε si signe($V_O I_2$)>0 et
c=1 si signe($V_O I_2$)<0.

Il est ainsi possible de déduire les fractions de temps passés sur chacune des combinaisons de commande des bras de commutation tout en évitant des commutations d'amplitude égale à E.

**Revendications**

1. Procédé de commande d'un onduleur multiniveaux de type NPC (Neutral Point Clamped) comprenant :

- trois bras de commutation (1, 2, 3) parallèles connectés entre une ligne positive et une ligne négative d'un bus, chaque bras de commutation étant doté de quatre interrupteurs de puissance ($T1_1$-$T3_4$) reliés en série, les interrupteurs de puissance étant commandés par un module de commande du variateur de vitesse à partir d'un vecteur tension de commande dans le but de commander une charge électrique,
- le module de commande utilisant un espace vectoriel hexagonal définissant les vecteurs tensions réalisables par les différentes combinaisons de commande des bras de commutation, lesdites différentes combinaisons de commande étant définies dans six triangles identiques (S1-S6) couvrant l'espace vectoriel, chaque triangle de l'espace vectoriel comportant notamment deux sommets définissant un premier côté du triangle et un point intermédiaire situé sur ledit premier côté, les deux sommets et le point intermédiaire correspondant chacun à une seule combinaison de commande des bras de commutation,
- deux condensateurs (C1, C2) connectés en série entre la ligne positive et la ligne négative du bus et un point milieu (O) défini entre les deux condensateurs, ledit point milieu étant traversé par un courant,

le procédé comprenant :

- une étape de détermination d'une position du vecteur tension de commande (U) dans l'un des six triangles identiques couvrant l'espace vectoriel hexagonal,
- une étape de régulation du potentiel électrique ($V_O$) du point milieu,

**caractérisé en ce que** lorsque l'onduleur fonctionne en surmodulation, l'étape de régulation du potentiel électrique du point milieu comporte :

- une étape de détermination du signe positif ou négatif du produit entre le courant ($I_O$) traversant le point milieu et son potentiel électrique ($V_O$),
- une étape de décomposition du vecteur tension de commande (U) en utilisant majoritairement le vecteur tension de l'espace vectoriel joignant ledit point intermédiaire du triangle lorsque le signe du produit est négatif ou en utilisant les deux vecteurs tension joignant lesdits deux sommets du triangle lorsque le signe du produit est positif.

2. Procédé de commande selon la revendication 1, **caractérisé en ce que** lorsque le signe du produit entre le courant ($I_O$) traversant le point milieu et son potentiel électrique ($V_O$) est positif, l'étape de décomposition du vecteur tension de commande utilise de manière minoritaire le vecteur tension de l'espace vectoriel joignant le point intermédiaire du triangle.

3. Procédé de commande selon la revendication 1 ou 2, **caractérisé en ce que** :

- chaque triangle comporte un deuxième côté et un troisième côté sur chacun desquels sont définis deux points intermédiaires formant deux combinaisons de commande des bras de commutation lorsque le potentiel électrique du point milieu est non nul, et **en ce que**,
- hors modulation, l'étape de régulation du point milieu comporte pour le deuxième côté et/ou le troisième côté du triangle, une étape d'introduction d'un vecteur décomposé en fonction des vecteurs tension joignant les points intermédiaires dudit côté.

4. Procédé de commande selon l'une des revendications 1 à 3, **caractérisé en ce que** selon la position du vecteur tension de commande dans l'un des triangles de l'espace vectoriel, le procédé comporte une étape pour toujours ramener le vecteur tension de commande dans un même triangle (S1) de l'espace vectoriel.

**Patentansprüche**

1. Steuerverfahren eines Mehrpegel-Wechselrichters von der Art NPC (Neutral Point Clamped), der enthält:

   - drei parallele Schaltarme (1, 2, 3), die zwischen einer positiven Leitung und einer negativen Leitung eines Busses angeschlossen sind, wobei jeder Schaltarm mit vier in Reihe geschalteten Leistungsschaltern ($T1_1$-$T3_4$) versehen ist, wobei die Leistungsschalter von einem Steuermodul des Drehzahlreglers ausgehend von einem Steuerspannungsvektor gesteuert werden, um eine elektrische Ladung zu steuern,
   - wobei das Steuermodul einen sechseckigen Vektorraum verwendet, der die von den verschiedenen Steuerkombinationen der Schaltarme ausführbaren Spannungsvektoren definiert, wobei die verschiedenen Steuerkombinationen in sechs gleichen Dreiecken (S1-S6) definiert sind, die den Vektorraum abdecken, wobei jedes Dreieck des Vektorraums insbesondere zwei Spitzen, die eine erste Seite des Dreiecks definieren, und einen Zwischenpunkt aufweist, der sich auf der ersten Seite befindet, wobei die zwei Spitzen und der Zwischenpunkt je einer einzigen Steuerkombination der Schaltarme entsprechen,
   - zwei Kondensatoren (C1, C2), die zwischen der positiven und der negativen Leitung des Busses und einem Mittenpunkt (0) in Reihe geschaltet sind, der zwischen den zwei Kondensatoren definiert ist, wobei der Mittenpunkt von einem Strom durchquert wird,

   wobei das Verfahren enthält:

   - einen Schritt der Bestimmung einer Position des Steuerspannungsvektors (U) in einem der sechs gleichen Dreiecke, die den sechseckigen Vektorraum abdecken,
   - einen Schritt der Regelung des elektrischen Potentials ($V_O$) des Mittenpunkts,

   **dadurch gekennzeichnet, dass**, wenn der Wechselrichter in Übermodulation arbeitet, der Schritt der Regelung des elektrischen Potentials des Mittenpunkts aufweist:

   - einen Schritt der Bestimmung des positiven oder negativen Vorzeichens des Produkts aus dem den Mittenpunkt durchquerenden Strom ($I_O$) und seinem elektrischen Potential($V_O$),
   - einen Schritt der Zerlegung des Steuerspannungsvektors (U), indem der den Zwischenpunkt des Dreiecks verbindende Spannungsvektor des Vektorraums mehrheitlich verwendet wird, wenn das Vorzeichen des Produkts negativ ist, oder die zwei die zwei Spitzen des Dreiecks verbindenden Spannungsvektoren verwendet werden, wenn das Vorzeichen des Produkts positiv ist.

2. Steuerverfahren nach Anspruch 1, **dadurch gekennzeichnet, dass**, wenn das Vorzeichen des Produkts aus dem den Mittenpunkt durchquerenden Strom ($I_O$) und seinem elektrischen Potential ($V_O$) positiv ist, der Schritt der Zerlegung des Steuerspannungsvektors den den Zwischenpunkt des Dreiecks verbindenden Spannungsvektor des Vektorraums minoritär verwendet.

3. Steuerverfahren nach Anspruch 1 oder 2, **dadurch gekennzeichnet, dass**:

   - jedes Dreieck eine zweite Seite und eine dritte Seite aufweist, auf jeder von denen zwei Zwischenpunkte definiert sind, die zwei Steuerkombinationen der Schaltarme formen, wenn das elektrische Potential des Mittenpunkts ungleich Null ist, und dass:
   - außerhalb der Modulation der Schritt der Regelung des Mittenpunkts für die zweite Seite und/oder die dritte Seite des Dreiecks einen Schritt der Einführung eines Vektors aufweist, der abhängig von den die Zwischenpunkte der Seite verbindenden Spannungsvektoren zerlegt ist.

4. Steuerverfahren nach einem der Ansprüche 1 bis 3, **dadurch gekennzeichnet, dass** je nach der Position des Steuerspannungsvektors in einem der Dreiecke des Vektorraums das Verfahren einen Schritt aufweist, um den Steuerspannungsvektor immer in das gleiche Dreieck (S1) des Vektorraums zurückzuführen.

**Claims**

1. Method of controlling a multilevel inverter of NPC (Neutral Point Clamped) type comprising:

   - three parallel switching arms (1, 2, 3) connected between a positive line and a negative line of a bus, each switching arm being fitted with four power switches ($T1_1$-$13_4$) linked in series, the power switches being controlled by a control module for the variable speed drive based on a control voltage vector with the aim of controlling an electrical load,
   - the control module using a hexagonal vector space defining the voltage vectors achievable by the various control combinations for the switching arms, the said various control combinations being defined in six identical triangles (S1-S6) covering the vector space, each triangle of the vector space comprising in particular two vertices defining a first side of the triangle and an intermediate point situated on the said first side, the two vertices and the intermediate point each corresponding to a single control combination for the switching arms,
   - two capacitors (C1, C2) connected in series between the positive line and the negative line of the bus and a mid-point (O) defined between the two capacitors, a current passing through the said mid-point,

   the method comprising:

   - a step of determining a position of the control voltage vector (U) in one of the six identical triangles covering the hexagonal vector space,
   - a step of regulating the electrical potential ($V_O$) of the mid-point,

   **characterized in that** when the inverter operates in overmodulation, the step of regulating the electrical potential of the mid-point comprises:

   - a step of determining the positive or negative sign of the product of the current ($I_O$) passing through the mid-point times its electrical potential ($V_O$),
   - a step of decomposing the control voltage vector (U) by using predominantly the voltage vector of the vector space joining the said intermediate point of the triangle when the sign of the product is negative or by using the two voltage vectors joining the said two vertices of the triangle when the sign of the product is positive.

2. Control method according to Claim 1, **characterized in that** when the sign of the product of the current ($I_O$) passing through the mid-point times its electrical potential ($V_O$) is positive, the step of decomposing the control voltage vector uses in a minority manner the voltage vector of the vector space joining the intermediate point of the triangle.

3. Control method according to Claim 1 or 2, **characterized in that**:

   - each triangle comprises a second side and a third side on each of which are defined two intermediate points forming two control combinations for the switching arms when the electrical potential of the mid-point is nonzero, and **in that**,
   - off-modulation, the step of regulating the mid-point comprises for the second side and/or the third side of the triangle, a step of introducing a decomposed vector as a function of the voltage vectors joining the intermediate points of the said side.

4. Control method according to one of Claims 1 to 3, **characterized in that** according to the position of the control voltage vector in one of the triangles of the vector space, the method comprises a step for always bringing the control voltage vector back to one and the same triangle (S1) of the vector space.

**Fig. 1**

**Fig. 2**

*Fig. 3*

*Fig. 4*

*Fig. 5*

PPN

Z

$V_o=0$

OON
PPO

PON

B M● C

U

PPP
OOO
NNN

X A Y

ONN
POO

PNN

*Fig. 6*

PPN

PPO ●
Ub

PON
●

OON ●

M●

U

PPP
OOO
NNN

● ●
ONN Ua POO

PNN

*Fig. 7*

PPN Io=0

Z

$V_o=0$

Io=I1+I2=-I3 OON
Io=I3 PPO

PON Io=I2

B M● C

U

PPP
OOO Io=0
NNN

X A Y

ONN Io=I1
POO Io=I2+I3=-I1

PNN Io=0

14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6795323 B
- US 6490185 B
- US 7495938 B

**Littérature non-brevet citée dans la description**

- **GUPTA A.K.** *A simple space vector PWM scheme to operate a three level NPC inverter at high modulation index including over-modulation region, with neutral point balancing,* 02 Octobre 2005